# EUROPÄISCHE PATENTSCHRIFT

(11) **EP 1 166 426 B1**
(45) Veröffentlichungstag und Bekanntmachung des Hinweises auf die Patenterteilung: **13.01.2016**
(21) Anmeldenummer: 01909475.4
(22) Anmeldetag: 16.01.2001
(51) Int. Cl.: H02K 5/24, F16F 15/04, F16F 1/32, F04D 29/66

(54) **GEBLÄSEMOTOR**
FAN MOTOR
MOTEUR DE VENTILATEUR

(30) Priorität: 20.01.2000 DE 10002231
(43) Veröffentlichungstag der Anmeldung: 02.01.2002
(73) Patentinhaber: ROBERT BOSCH GMBH, 70442 Stuttgart (DE)
(72) Erfinder: NOLTING, Peter, 77830 Buehlertal (DE); KEHRER, Wolfgang, 79110 Freiburg (DE)
(86) Internationale Anmeldenummer: PCT/DE2001/000159
(87) Internationale Veröffentlichungsnummer: WO 2001/054252

(56) Entgegenhaltungen:
- WO-A-99/03608
- DE-A- 19 906 585
- FR-A- 2 761 120
- GB-A- 2 030 377
- US-A- 2 352 591
- US-A- 3 601 502

## Beschreibung

### Stand der Technik

Die Erfindung geht von einem Gebläsemotor nach dem Oberbegriff des Anspruchs 1 aus.

Gebläsemotoren für Heizungsanlagen von Kraftfahrzeugen, werden in der Regel in einem Gehäusetopf untergebracht, der mit seinem Befestigungsflansch an einer Öffnung der Heizungsanlage befestigt ist und die Öffnung dicht abschließt. Um zu verhindern, daß Schwingungen und Körperschall auf Karosserieteile übertragen werden und Geräusche verursachen, sind zwischen dem Gebläsemotor und den Befestigungsstellen Dämpfungselemente angeordnet. Sie bestehen z.B. aus gummielastischen Dämpfungs- und Dichtringen, die im Befestigungsbereich des Befestigungsflansches und/oder zwischen dem Gebläsemotor und dem Gehäusetopf angeordnet sind und den Heizungskanal abdichten.

Am Boden des Gehäusetopfs können sich gleichfalls einzelne Dämpfungselemente befinden, die am Gehäusetopf befestigt sind, mit ihrer Stirnseite in den Innenraum des Gehäusetopfs ragen und axiale Anlagepunkte für den Gebläsemotor bilden. Dabei werden zuerst die einzelnen Dämpfungselemente montiert und anschließend wird der Gebläsemotor in den Gehäusetopf eingesetzt. Aufgrund der hohen Reibungskräfte zwischen dem Gebläsemotor und den Dämpfungselementen, lassen sich die Gebläsemotoren nur schwer montieren. Der am Gehäusetopf angeformte Befestigungsflansch ist zudem anwendungsspezifisch auf jeden Fahrzeugtyp abgestimmt, so daß jede geometrische Variante der Befestigung zur Heizungsanlage ein gesamtes Flansch-Gehäusetopf-Neuteil erfordert. Die große Teilevielfalt erschwert außerdem die Lagerhaltung und Logistik.

Eine andere Lagerung besteht darin, daß auf dem Gebläsemotor ein Adapter vormontiert ist, der auf den Umfang verteilte Dämpfungselemente aufnimmt. Diese sichern die Lage des Gebläsemotors sowohl in axialer als auch in radialer Richtung. Zwar können durch den Adapter verschiedene Gebläsemotoren einem Gehäusetopf zugeordnet werden, aber dies ist nur durch den zusätzlichen Adapter realisierbar, der die Teilevielfalt und den Montage- und Fertigungsaufwand erhöht.

Ferner kann der Gebläsemotor an der Heizungsanlage mittels eines Befestigungsrahmens angebracht werden. Dieser besitzt drei auf den Umfang verteilte Stege, die an ihren Enden Befestigungsaugen mit Gummielastteilen aufweisen. Die Kombination von mechanischer Befestigung und Entkopplung begrenzt jedoch die Wahl der optimalen physikalischen Eigenschaften der Dämpfungselemente, denn diese müssen neben guten Dämpfungseigenschaften auch eine genügend große Festigkeit aufweisen. Die dabei entstehenden Kompromißlösungen bezüglich der inneren Reibung, der Shore-Härte, der Relaxation und der Temperaturbeständigkeit führen daher nicht immer zu einer ausreichenden Entkopplung. Da ferner generell die Forderung besteht, das Austreten von Leckluft im Bereich der Gebläsemotors zu vermeiden, ist zudem bei einer Lagerung des Gebläsemotors im vorher beschriebenen Befestigungsrahmen eine zusätzliche Abdeckung auf der Rückseite des Gebläsemotors notwendig.

Die US-A-3601502, DE-A-19906585 und FR-A-2761120 beschreiben einen Gebläsemotor nach dem Stand der Technik.

### Vorteile der Erfindung

Die Erfindung betrifft einen Gebläsemotor mit den Merkmalen des Anspruchs 1.

Nach der Erfindung ist wischen einem Gehäusetopf und einem Befestigungsbereich eines Befestigungsflansches mindestens ein ringförmiges Dämpfungselement angeordnet. Dieses kann ausschließlich nach Dämpfungserfordernissen ausgelegt werden und ein ausreichendes Volumen haben, ohne die Zuordnung vom Gebläsemotor zum Gehäusetopf konstruktiv zu beeinflussen und das Bauvolumen des Gehäusetopfs zu vergrößern. Ferner bleibt durch die ringförmige Ausgestaltung des Dämpfungselements die Abdichtung der Montageöffnung des Gehäusetopfs erhalten. Zur Abdichtung des Befestigungsflansches unmittelbar am Befestigungsbereich sowie eines Spalts zwischen dem Gebläsemotor und dem Gehäusetopf reichen kleinvolumige Dichtungsmittel in Form von Dichtringen oder Dichtanstrichen aus. Der Gebläsemotor ist auf einfache Weise mechanisch direkt im Gehäusetopf befestigt, wodurch einerseits Bauteile entfallen und andererseits die Montage vereinfacht wird.

Um verschiedenartige Anforderungen an die Dämpfung zu erfüllen, ist es zweckmäßig, daß das Dämpfungselement aus verschiedenen Teilen besteht, deren Werkstoffe unterschiedliche physikalische Eigenschaften haben. Dadurch können insbesondere unterschiedliche Dämpfungseigenschaften in radialer Richtung und in Umfangsrichtung erzielt werden.

Gemäß einer Ausgestaltung der Erfindung ist vorgesehen, daß der Gehäusetopf gegenüber dem Befestigungsbereich in Umfangsrichtung und/oder in radialer und/oder in axialer Richtung eine Wegbegrenzung aufweist. Diese verhindert insbesondere bei einer weichen, unterkritischen Abstimmung der Dämpfungselemente, daß diese bei Belastungsstößen, z.B. beim Einschalten des Gebläsemotors oder bei Erschütterungen, nicht überbeansprucht werden oder daß der Gebläsemotor zu große Bewegungen ausführt und an benachbarte Teile anstößt. Die Wegbegrenzung kann in einfacher Weise durch Langlöcher am Befestigungsflansch gebildet werden, in die stirnseitige, in Dämpfungselemente eingebettete Verlängerungen des Gehäusetopfs eingreifen. Nach einem vorgegebenen Dämpfungsweg werden die Verlängerungen durch die Konturen der Langlöcher blockiert.

Der Befestigungsflansch besteht zweckmäßigerweise aus einem inneren und einem äußeren Teil. Die Teile sind über das ringförmige Dämpfungselement miteinander verbunden. Der innere Teil des Befestigungsflansches kann an dem Gehäusetopf angeformt bzw. unlösbar oder lösbar befestigt sein, während der äußere Teil an seinem äußeren Rand den Befestigungsbereich aufweist. Die Verbindung zwischen dem äußeren Teil und dem inneren Teil kann unterschiedlich gestaltet werden und den Einbaubedingungen angepaßt werden. Zweckmäßigerweise überlappt der äußere Teil den inneren Teil, wobei im Überlappungsbereich das Dämpfungselement angeordnet ist. Dieses kann mit den Teilen durch Vulkanisieren, Kleben oder einem Spritzverfahren, insbesondere einem Zweikomponenten-Spritzverfahren, mit den Teilen verbunden werden. Es ist auch möglich, das Dämpfungselement zwischen dem äußeren und dem inneren Teil durch mechanische Befestigungsmittel, z.B. Nieten oder Schrauben unter Verwendung von Unterlegscheiben zu fixieren, wobei die Befestigungselemente gegenüber den Teilen des Befestigungsflansches durch weitere Dämpfungselemente entkoppelt sind.

Für die Daüerhaltbarkeit der Dämpfungselemente ist es am günstigsten, wenn sie auf Schub oder Druck belastet werden. So ist gemäß einer Ausgestaltung der Erfindung der Befestigungsflansch bei einem waagerechten Einbau des Gebläsemotors so ausgebildet und das ringförmige Dämpfungselement so angeordnet, daß es auf Druck beansprucht wird. Für eine gezielte weiche Abstimmung des Dämpfungselements kann es in einzelnen Anwendungsfällen jedoch auch zweckmäßig sein, das Dämpfungselement auf Zug zu beanspruchen.

Um einen einteiligen Befestigungsflansch zu erhalten, ist es zweckmäßig, das Dämpfungselement zwischen dem Gehäusetopf und dem Befestigungsflansch anzuordnen. Dabei kann das Dämpfungselement mit einem oder beiden Teilen fest oder lösbar verbunden sein. Die lösbare Verbindung hat den Vorteil, daß verschiedene Befestigungsflansche mit einem Gehäusetopf kombiniert werden können, so daß mit wenigen Teilen eine große Variantenvielfalt angeboten werden kann. Eine einfache Ausgestaltung ergibt sich, wenn das Dämpfungselement den Gehäusetopf umgibt und von einem am Befestigungsflansch angeformten Kragen umfaßt wird. Die axiale Länge des Kragens bewirkt eine gute Abstützung des Gebläsemotors und kann auf die vom Gebläsemotor ausgeübten Kippmomente und Schubkräfte abgestimmt werden.

Um den Gebläsemotor im Gehäusetopf in axialer Richtung zu sichern, kann es zweckmäßig sein, einen Deckel vorzusehen, der sich über ein weiteres Dämpfungselement am Motor und/oder dem Gehäusetopf stirnseitig abstützt und an axialen Vorsprüngen des Befestigungsflansches angeklipst wird. Die axialen Vorsprünge liegen zweckmäßigerweise an einer schuhförmigen Aufnahme für das ringförmige Dichtelement, das am Umfang des Gehäusetopfs anliegt.

Gemäß einer weiteren Ausgestaltung der Erfindung ist ein Belüftungskanal vorgesehen, der mit dem äußeren Teil des Befestigungsflansches verbunden ist und gegenüber dem Gehäusetopf durch ein zusätzliches ringförmiges Dämpfungselement entkoppelt ist. Durch die gute Luftzirkulation wird der Gebläsemotor ausreichend gekühlt und vor Überhitzung geschützt.

Um den Gebläsemotor besser montieren zu können, ist es vorteilhaft, den Gehäusetopf in einer Längsebene oder in einer Querebene zu teilen. Wird er in einer Querebene geteilt, wird der Flansch und das ringförmige Dämpfungselement im Bereich der Trennebene angeordnet, wobei das Dämpfungselement am äußeren Umfang in vorteilhafter Weise beiderseits der Trennfuge mit dem Gehäusetopf verklebt oder sonstwie verbunden werden kann. Bei einer Teilung in einer Längsebene preßt das Dämpfungselement und der Flansch die beiden Teile an den Trennflächen zusammen.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Zeichnung

Es zeigen:
- Fig. 1: einen schematischen Längsschnitt durch einen Gehäusetopf mit mindestens einem ringförmigen Dämpfungselement im Bereich eines Befestigungsflansches,
- Fig. 2: eine Draufsicht in Richtung des Pfeils II in Fig. 1,
- Fig. 3-5: Varianten zu Fig. 1,
- Fig. 6: einen schematischen Längsschnitt durch einen Gehäusetopf mit einem Dämpfungselement im Übergangsbereich zum Befestigungsflansch,
- Fig. 7: eine Variante zu Fig. 6,
- Fig. 8: eine Draufsicht in Richtung des Pfeils VIII in Fig. 7 im Ausschnitt,
- Fig. 9: einen schematischen Längsschnitt durch einen waagerecht angeordneten Gehäusetopf,
- Fig. 10, 11: Varianten zu Fig. 6,
- Fig. 12: einen schematischen Längsschnitt durch den Befestigungsflansch eines Gehäusetopfs mit einer elastischen Zone,
- Fig. 13: eine Variante zu Fig.11 in einer Draufsicht in Richtung eines Pfeils XIII in Fig. 12,
- Fig.14: einen schematischen Längsschnitt durch einen Gehäusetopf mit einer Trennebene quer zur Achsrichtung des Gebläsemotors,
- Fig. 15: einen schematischen Längsschnitt durch einen Gehäusetopf mit einer Trennebene in Achsrichtung des Gebläsemotors,
- Fig. 16-22: Varianten zu Fig.14.

### Beschreibung der Ausführungsbeispiele

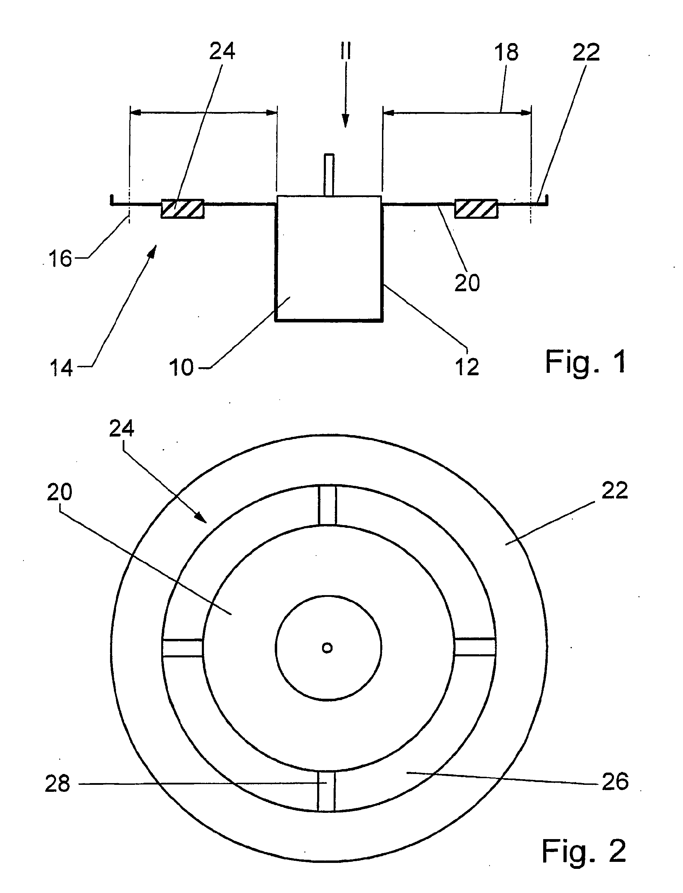

Ein Gebläsemotor 10 ist in einem Gehäusetopf 12 untergebracht, der über einen Befestigungsflansch 14 mit einer hier nicht dargestellten Heizungsanlage verbunden ist. Der Gebläsemotor 10 treibt ein Lüfterrad 76 mit einer Lüfternabe 78 und mit einer radialen Beschaufelung an. Der Befestigungsflansch 14 besteht in den Ausführungen nach Fig. 1 bis 5 aus einem inneren Teil 20 und einem äußeren Teil 22, die durch mindestens ein ringförmiges Dämpfungselement 24 verbunden sind. Das Dämpfungselement 24 kann aus mehreren ringförmigen oder ringförmig zusammengefügten Teilen 26, 28 bestehen, die unterschiedliche physikalische Eigenschaften haben. Die Zusammensetzung der Teile 26, 28 und ihre physikalischen Eigenschaften werden entsprechend den jeweiligen Anforderungen des Einbaufalls gewählt. So können die Elastizität und die Tragfähigkeit in radialer, axialer Richtung und/oder in Umfangsrichtung auf den Einbaufall abgestimmt werden. (Fig. 2).

Durch die Ringform des Dämpfungselements 24 werden einerseits gute Dämpfungseigenschaften erzielt und andererseits die Teile 20 und 22 dicht miteinander verbunden, so daß keine Luft aus der Heizungsanlage durch den Dämpfungsbereich entweichen kann. Der äußere Teil 22 des Befestigungsflansches 14 weist einen Befestigungsbereich 16 auf, der einen radialen Abstand 18 zum Gebläsemotor 10 besitzt.

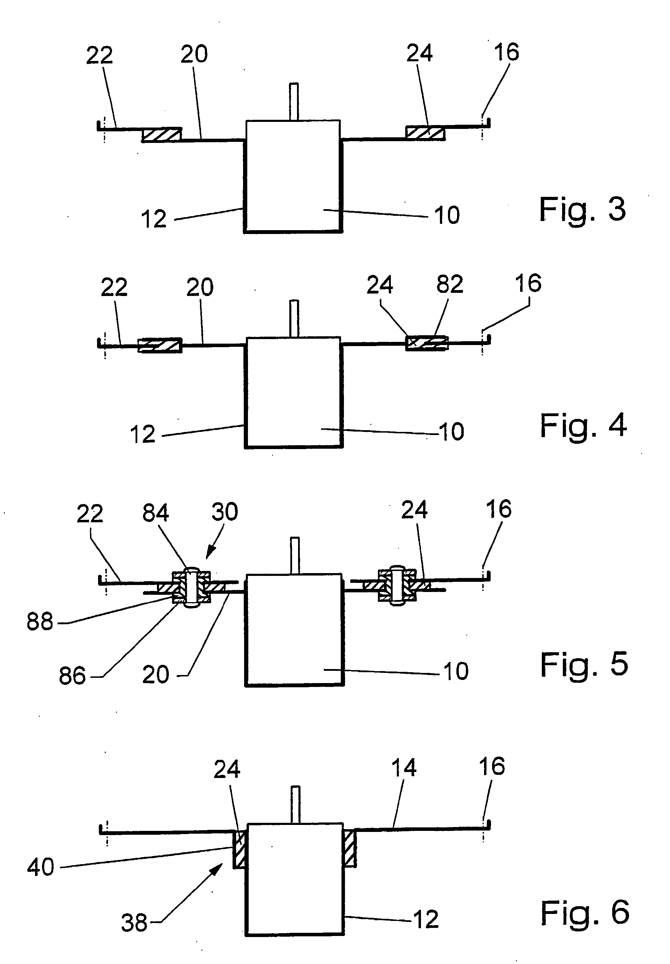

Fig. 3 zeigt einen Gehäusetopf 12, wobei der äußere Teil 22 des Befestigungsflansches 14 den inneren Teil 20 im Bereich zwischen dem Gehäusetopf 12 und dem Befestigungsbereich 16 des Befestigungsflansches 14 teilweise überlappt. Im Überlappungsbereich verbindet das ringförmige Dämpfungselement 24 die Teile 20, 22, indem es an diesen angespritzt, geklebt oder vulkanisiert ist. Eine weitere Ausgestaltung der Verbindungsstelle ist auch in Fig. 4 dargestellt, wobei der innere Teil 20 an seinem Umfang als Schuh 82 ausgebildet ist. Dieser ist mit dem Dämpfungselement 24 ausgefüllt, z.B. ausgesprizt, in das der äußere Teil von der offenen Seite her eingebettet ist.

Fig. 5 zeigt eine weitere Ausgestaltung, in welcher der äußere Teil 22 den inneren Teil 20 überlappt. Das Dämpfungselement 24 ist als separates Bauteil zwischen dem inneren Teil 20 und dem äußeren Teil 22 angeordnet. An mehreren über den Umfang verteilten Befestigungsstellen 30 halten mechanische Befestigungsmittel in Form von Nieten 84 oder Schrauben in Verbindung mit Scheiben 86 die Teile 20, 22 zusammen. Ein weiteres Dämpfungselement 88 entkoppelt die Befestigungsteile 84, 86 von den Teilen 20, 22 des Befestigungsflansches 14. Bevor die Teile 20, 22 miteinander verbunden werden, kann der Befestigungsflansch 14 durch einen entsprechend ausgewählten äußeren Teil 22 an die jeweiligen Einbauverhältnisse angepaßt werden.

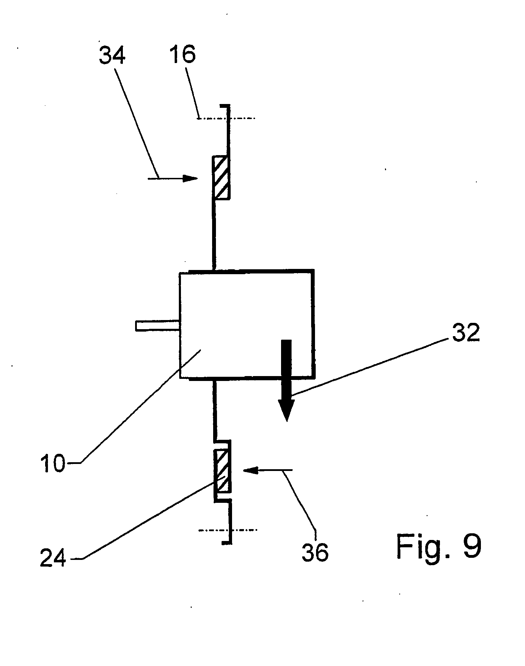

Der Gebläsemotor 10 und der Gehäusetopf 12 können je nach Bedarf senkrecht, waagerecht oder schräg eingebaut werden. In Fig. 9 ist eine waagerechte Einbaulage dargestellt, wobei das Dämpfungselement 24 vorteilhafterweise so angeordnet ist, daß das durch die Schwerkraft 32 verursachte Kippmoment das Dämpfungselement 24 sowohl im oberen als auch im unteren Bereich in Richtung der Pfeile 34 und 36 auf Druck beansprucht. Dies läßt sich erreichen, indem der äußere Teil 22 geteilt ist und der untere oder obere Bereich der Teile 20, 22 entsprechend gekröpft ist.

Bei der Ausführung nach Fig. 6 ist das ringförmige Dämpfungselement 24 im Übergangsbereich 38 des Gehäusetopfs 12 zum Befestigungsflansch 14 hin angeordnet. Dadurch kann der Befestigungsflansch 14 einteilig ausgeführt werden und der Gehäusetopf 12 erhält eine einfache Außenkontur. Zweckmäßigerweise besitzt der Befestigungsflansch 14 an seiner zum Gehäusetopf 12 weisenden Seite einen angeformten Kragen 40, der das Dämpfungselement 24 umgibt und den Gebläsemotor 10 gegenüber Kippmomenten gut abstützt. Das Dämpfungselement 24 kann in geeigneter Weise mit dem Befestigungsflansch 14 an seinem Kragen 40 und/oder mit dem Gehäusetopf 12 fest verbunden sein. Eine lösbare Verbindung hat den Vorteil, daß der Befestigungsflansch 14 zur Anpassung an die Einbauverhältnisse modifiziert werden kann, während der Gehäusetopf 12 mit dem Gebläsemotor 10 für zahlreiche Anwendungen gleich bleibt.

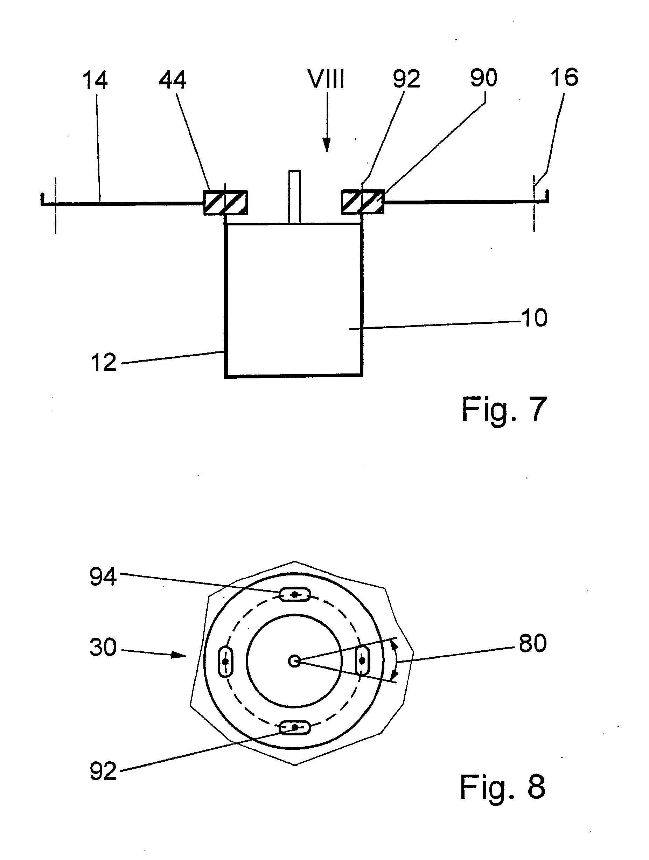

Fig. 7 zeigt eine Ausgestaltung mit einem stirnseitig am Gehäusetopf 12 angebrachten Befestigungsflansch 14. Dazu weist dieser an seinem Innendurchmesser einen angeformten Bund 44 auf, der das zwischen Gehäusetopf 12 und Befestigungsflansch 14 angeordnete Dämpfungselement 90 sowohl axial als auch radial fixiert. Zweckmäßigerweise ist der Befestigungsflansch 14 mechanisch an der Stirnseite des Gehäusetopfs 12 befestigt, indem er auf stirnseitigen Verlängerungen 92 des Gehäusetopfs 12 sitzt, die auf den Umfang verteilt und im Dämpfungselement 90 eingebettet sind. Sie ragen durch Langlöcher 94 des Befestigungsflansches 14, die die maximale Bewegung des Gehäusetopfs 12 relativ zum Befestigungsflansch 14 begrenzen. Der mögliche Drehweg ist mit 80 bezeichnet. (Fig. 8)

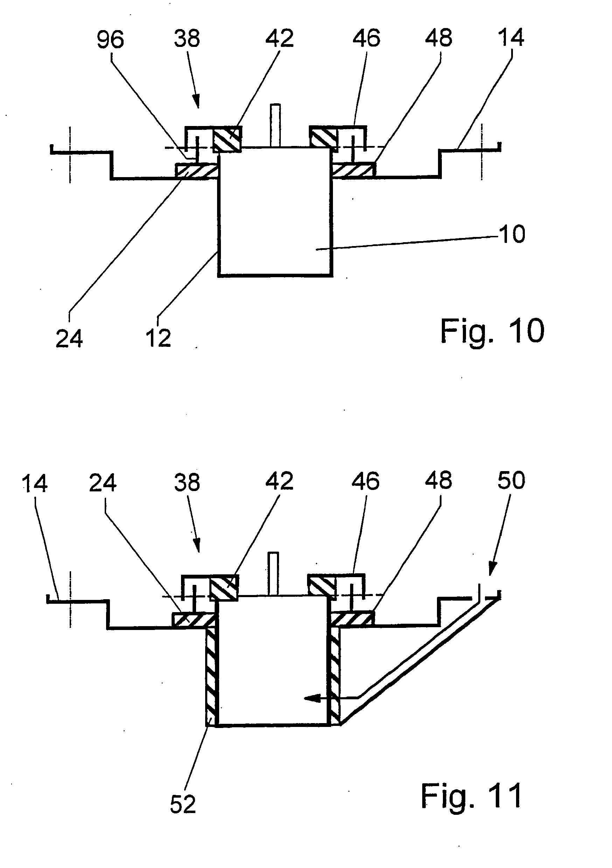

Fig. 10 zeigt eine Anordnung, bei der das Dämpfungselement 24 im Übergangsbereich 38 in einer schuhförmigen, zum Gehäusetopf 12 hin offenen Aufnahme 48 am Innendurchmessers des Befestigungsflansches 14 untergebracht ist. Die Aufnahme 48 hat stirnseitig Vorsprünge 96, auf die ein Deckel 46 geklipst ist, der sich über ein weiteres Dämpfungselement 42 an der Stirnseite des Gebläsemotors 10 und/oder des Gehäusetopfs 12 abstützt. Das Dämpfungselement 24 kann den Gebläsemotor 10 in axialer Richtung fixieren und den Spalt zwischen diesem und dem Gehäusetopf 12 abdichten.

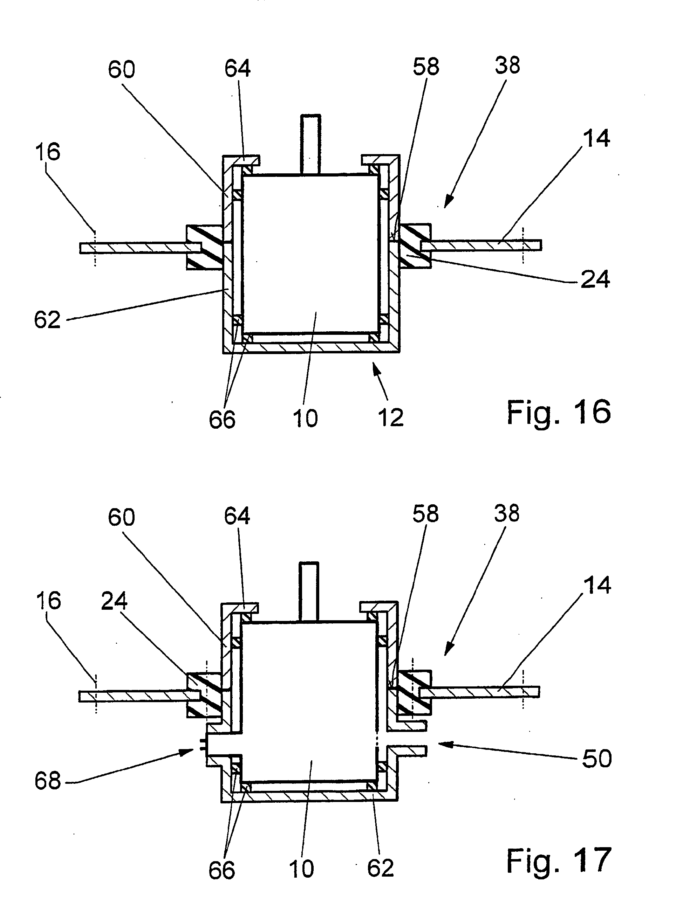

Bei zu starker Erwärmung muß der Gebläsemotor 10 mit Kühlluft versorgt werden. Eine Variante nach Fig. 11 weist einen Belüftungskanal 50 auf, der über ein weiteres Dämpfungselement 52 gegenüber dem Gehäusetopf 12 entkoppelt ist. Einen ähnlichen Belüftungskanal zeigt die Ausführung nach Fig. 17 bei einem quer geteilten Gehäusetopf 12. Zur Verbesserung der Entkopplung zwischen dem Gehäusetopf 12 und dem Gebläsemotor 10 sowie zur gezielten Belüftung des Innenraums des Gehäusetopfs 12 zur Motorkühlung sind zwischen dem Gebläsemotor 10 und dem Gehäusetopf 12 weitere Dämpfungselemente 66 in Form von Dichtringen vorgesehen, die den Gebläsemotor 10 in axialer und radialer Richtung abstützen.

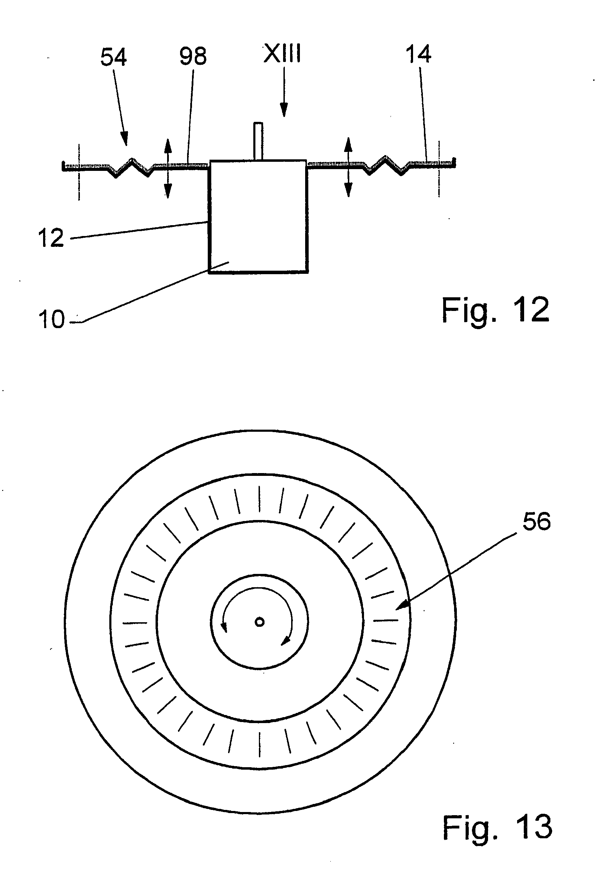

Fig. 12 zeigt eine weitere Variante eines Befestigungsflansches 14, der selbst in einem Bereich als Dämpfungselement 54 ausgebildet ist, indem dieser Bereich in radialer Richtung gewellt oder gefaltet ist und somit gegenüber Belastungen in radialer und axialer Richtung nachgiebiger ist. Um eine Nachgiebigkeit in Umfangsrichtung zu erzielen, wird der Bereich des Befestigungsflansches 14 als Dämpfungselement 56 in Umfangsrichtung gewellt oder gefaltet (Fig. 13), wobei die Wellen des elastisch nachgiebigen Bereichs strahlenförmig nach außen verlaufen. Die Nachgiebigkeit kann durch die geometrische Gestaltung und die Materialstärke in diesem Bereich beeinflußt werden. Ferner können die geräuschdämpfenden Eigenschaften weiter verbessert werden, indem auf eine Stirnseite des Befestigungsflansches 14 oder auf beide eine Schicht 98 aus Dämpfungsmaterial aufgetragen wird.

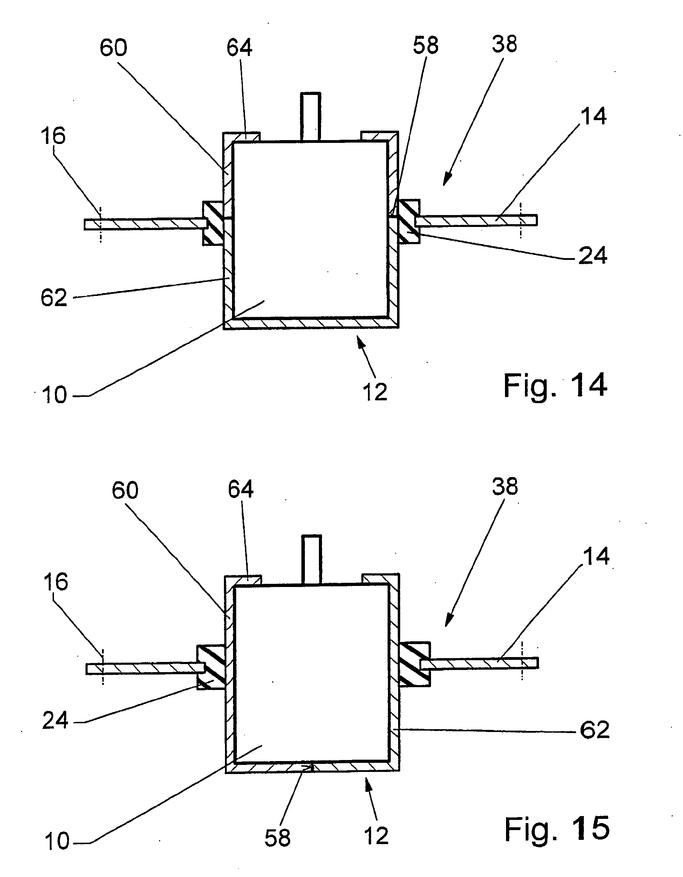

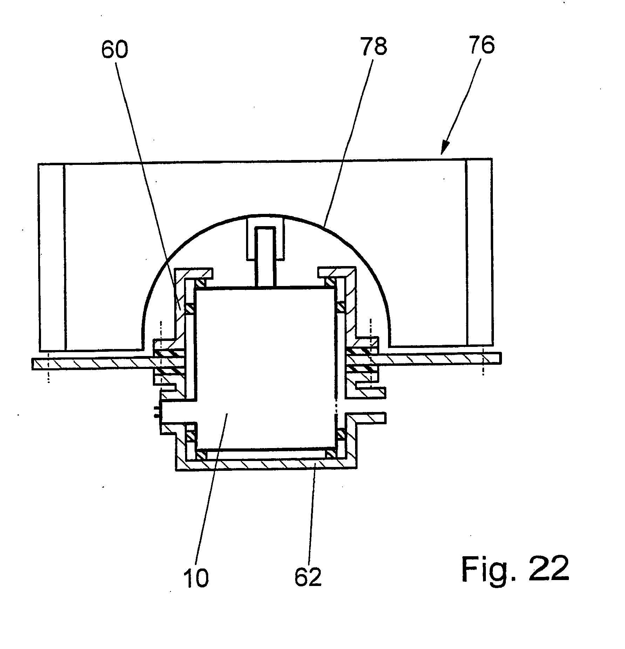

Die Ausführungen nach Fig. 14 bis Fig. 21 weisen einen geteilten Gehäusetopf 12 auf, während der Gehäusetopf 12 nach Fig. 15 in einer in Achsrichtung des Gebläsemotors 10 verlaufenden Trennebene 58 geteilt ist, sind die Gehäusetöpfe 12 nach den Fig. 14, 15 bis 22 in einer Trennebene 58 geteilt, die quer zur Achsrichtung des Gebläsemotors 10 verläuft. Die Gehäuseteile des Gehäusetopfs 12 sind mit 60 und 62 bezeichnet. Der Gebläsemotor 10 ist zwischen dem Gehäuseboden des Gehäusetopfs 12 und einem an der gegenüberliegenden Stirnseite vorgesehenen Bund 64 axial fixiert.

Bei den Ausführungen, bei denen der Gehäusetopf 12 in einer Querebene geteilt ist, ist das ringförmige Dämpfungselement 24 und der Befestigungsflansch 14 im Bereich der Trennebene 58 angeordnet. Das Dämpfungselement 24 kann dabei durch Druck, durch Kleben, durch Vulkanisieren oder durch ein Spritzverfahren, vorzugsweise ein ZweikomponentenSpritzverfahren, an den Teilen 60 bzw. 62 des Gehäusetopfs 12 und/oder am Befestigungsflansch 14 befestigt werden. Das Dämpfungselement 24 kann auch über mechanische Verbindungsmittel in Form von Schrauben, Nieten in Verbindung mit Scheiben, ähnlich wie bei der Ausführung in Fig. 5, am Befestigungsflansch fixiert werden.

Bei den Ausführungen nach Fig. 16 bis 22 sind zwischen dem Gebläsemotor 10 und dem Gehäusetopf 12 weitere Dämpfungselemente 66 angeordnet, an denen sich der Gebläsemotor 10 in axialer und radialer Richtung abstützt. Der Innenraum des Gehäusetopfs 12 wird über einen Belüftungskanal 50 gezielt belüftet, so daß der Gebläsemotors 10 ausreichend gekühlt wird. Der Belüftungskanal 50 und ein elektrischer Anschluß 68 für den Gebläsemotor 10 werden zweckmäßigerweise am gleichen Gehäusetopfteil 62 angeordnet, so daß das andere Gehäusetopfteil 60 bei allen Ausführungen gleich ausgeführt werden kann.

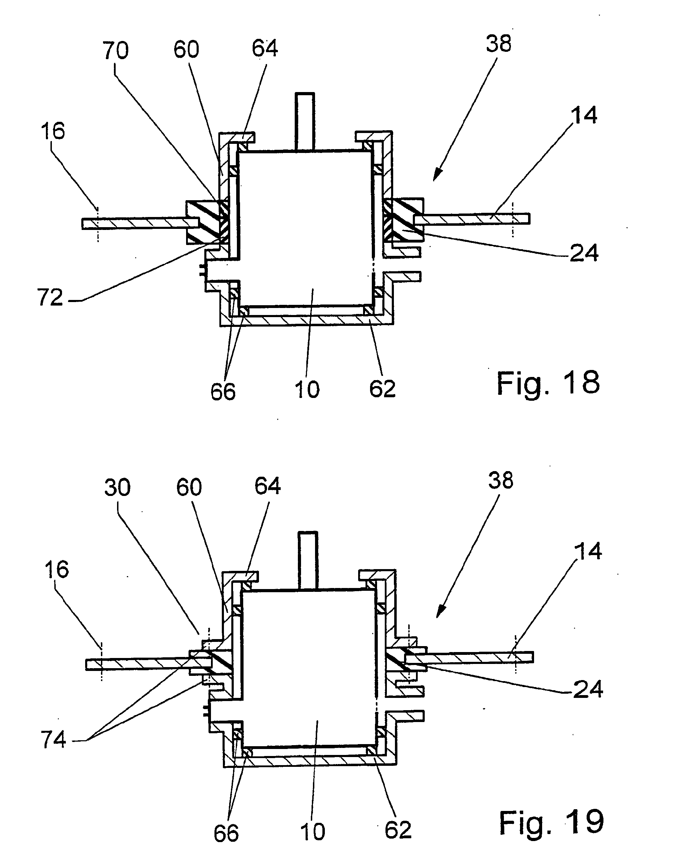

Bei der Ausführung nach Fig. 18 sind an den der Trennfuge zugewandten Stirnseite der Gehäusetopfteile 60 und 62 Dämpfungselemente 70 und 72 angespritzt, die im montierten Zustand stirnseitig aneinander stoßen und an die sich nach außen hin das ringförmige Dichtelement 24 anschließt.

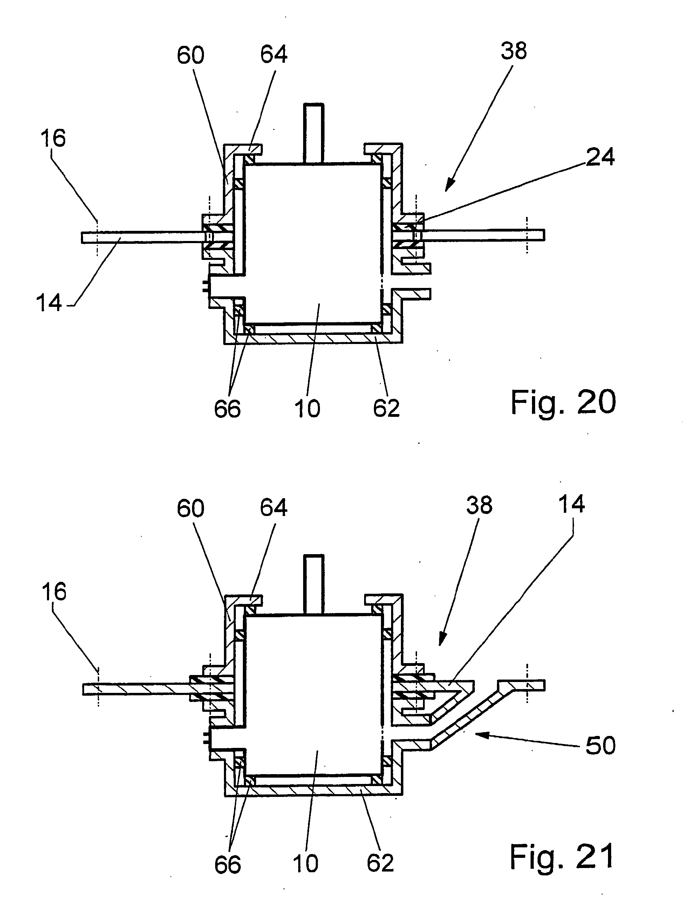

Die Gehäusetopfteile 60 und 62 nach den Ausführungen gemäß den Fig. 19 bis 22 besitzen zur Trennfuge hin Ränder 74, zwischen denen das ringförmige Dämpfungselement 24 angeordnet ist und durch nicht näher dargestellte Befestigungsmittel eingespannt ist. Während bei der Ausführung nach Fig. 19 das ringförmige Dämpfungselement 24 einteilig ist, besteht das Dämpfungselement 24 nach den Ausführungen gemäß Fig. 20 bis 22 aus zwei Teilen, die zu beiden Seiten des Befestigungsflansches 14 angeordnet sind und wahlweise am Befestigungsflansch 14 oder an den Rändern 74 der Gehäuseteile 60 bzw. 62 in geeigneter Weise befestigt sind.

Die Ausführung nach Fig. 21 weist als Besonderheit einen im Befestigungsflansch 14 integrierten Belüftungskanal 50 auf,

**Bezugszeichen**

| | | | |
|---|---|---|---|
| 10 | Gebläsemotor | 56 | Dämpfungselement |
| 12 | Gehäusetopf | 58 | Trennebene |
| 14 | Befestigungsflansch | 60 | Gehäusetopfteil |
| 16 | Befestigungsbereich | 62 | Gehäusetopfteil |
| 18 | Abstand | 64 | Bund |
| 20 | innerer Teil | 66 | Dämpfungselement |
| 22 | äußerer Teil | 68 | elektrischer Anschluß |
| 24 | Dämpfungselement | 70 | Dämpfungselement |
| 26 | Teil | 72 | Dämpfungselement |
| 28 | Teil | 74 | Rand |
| 30 | Befestigungsstellen | 76 | Lüfterrad |
| 32 | Schwerkraft | 78 | Lüfternabe |
| 34 | Pfeil | 80 | Drehweg |
| 36 | Pfeil | 82 | Schuh |
| 38 | Übergangsbereich | 84 | Niet |
| 40 | Kragen | 86 | Scheibe |
| 42 | Dämpfungselement | 88 | Dämpfungselement |
| 44 | Bund | 90 | Dämpfungselement |
| 46 | Deckel | 92 | Vorsprung |
| 48 | Aufnahme | 94 | Langloch |
| 50 | Belüftungskanal | 96 | Vorsprung |
| 52 | Dämpfungselement | 98 | Schicht |
| 54 | Dämpfungselement | | |

## Patentansprüche

1. Gebläsemotor (10), der in einem Gehäusetopf (12) mit einem Befestigungsflansch (14) untergebracht ist, wobei zwischen dem Gehäusetopf (12) und einem Befestigungsbereich (16) des Befestigungsflansches (14) mindestens ein ringförmiges Dämpfungselement (24, 54, 56, 90) angeordnet ist, **dadurch gekennzeichnet, dass** der Befestigungsflansch (14) aus einem inneren Teil (20) und einem äußeren Teil (22) besteht, die über das Dämpfungselement (24) miteinander verbunden sind.

2. Gebläsemotor (10) nach Anspruch 1, **dadurch gekennzeichnet, dass** das Dämpfungselement (24) aus Werkstoffen mit unterschiedlichen physikalischen Eigenschaften besteht.

3. Gebläsemotor (10) nach einem der vorhergehenden Ansprüche, **dadurch gekennzeichnet, dass** der Gehäusetopf (12) gegenüber dem Befestigungsbereich (16) in Umfangsrichtung und/oder in radialer und/oder in axialer Richtung eine Wegbegrenzung aufweist.

4. Gebläsemotor (10) nach einem der Ansprüche 1 bis 3, **dadurch gekennzeichnet, dass** sich der innere Teil (20) und der äußere Teil (22) teilweise überlappen und in diesem Bereich das ringförmige Dämpfungselement (24) angespritzt, aufvulkanisiert oder aufgeklebt ist. (Fig. 3)

5. Gebläsemotor (10) nach einem der Ansprüche 1 bis 3, **dadurch gekennzeichnet, dass** der innere Teil (20) und der äußere Teil (22) in einer Ebene liegen und ein Teil (20, 22) an der Verbindungsstelle das Dämpfungselement (24) mit einem ringförmigen Schuh (82) umfasst, während das andere Teil (20, 22) über die offene Seite in ein Dämpfungselement (24) eingebettet ist.

6. Gebläsemotor (10) nach einem der Ansprüche 1 bis 3, **dadurch gekennzeichnet, dass** der äußere Teil (22) den inneren Teil (20) überlappt und zwischen beiden Teilen (20, 22) mindestens ein ringförmiges Dämpfungselement (24) angeordnet ist, das zwischen beiden Teilen (20, 22) über Befestigungselemente (84, 86) verspannt ist, die gegenüber den Teilen (20, 22) durch weitere Dämpfungselemente (88) entkoppelt sind. (Fig. 5)

7. Gebläsemotor (10) nach einem der Ansprüch 1 bis 3, **dadurch gekennzeichnet, dass** bei einem waagerechten Einbau des Gebläsemotors (10) das ringförmige Dämpfungselement (24) so angeordnet ist, dass es auf Druck (34, 36) beansprucht wird. (Fig. 9)

8. Gebläsemotor (10) nach einem der vorhergehenden Ansprüche, **dadurch gekennzeichnet, dass** der Befestigungsflansch (14) lösbar mit dem Gehäusetopf (12, 60, 62) verbunden ist.

9. Gebläsemotor (10) nach dem Oberbegriff von Anspruch 1 oder nach Anspruch 8, **dadurch gekennzeichnet, dass** der Gehäusetopf (12) eine waagerechte oder eine senkrechte Trennebene (58) besitzt, wobei die beiden Gehäusetopfteile (60, 62) mittels Klipse, Kleber, Schrauben oder Nieten verbunden sind und wobei an den Gehäusetopfteilen (60, 62) unter Zwischenschaltung von mindestens einem ringförmigen Dämpfungselement (24) der Befestigungsflansch (14) angebracht ist. (Fig. 14 bis 22)

10. Gebläsemotor (10) nach Anspruch 9, **dadurch gekennzeichnet, dass** der Gebläsemotor (10) starr oder unter Zwischenschaltung von Dämpfungs- und Dichtelementen (66) in waagerechter und/oder in senkrechter Richtung im Gehäusetopf (12) gelagert ist. (Fig. 16 bis 22)

11. Gebläsemotor (10) nach Anspruch 9, **dadurch gekennzeichnet, dass** elektrische Anschlüsse (68) bzw. anlagenspezifische Belüftungskanäle (50) einem Gehäusetopfteil (62) zugeordnet sind. (Fig. 17 bis 22)

12. Gebläsemotor (10) nach Anspruch 9, **dadurch gekennzeichnet, dass** die Gehäusetopfteile (60, 62) im Bereich der Trennebene (58) angespritzte Dämpfungselemente (70, 72) aufweisen, die stoffschlüssig mit dem ringförmigen Dämpfungselement (24) verbunden sind, welches am Befestigungsflansch (14) angespritzt ist. (Fig. 18)

13. Gebläsemotor (10) nach Anspruch 9, **dadurch gekennzeichnet, dass** die Gehäusetopfteile (60, 62) im Bereich der Trennebene (58) angeformte Ränder (74) besitzen, die miteinander verschraubt oder vernietet sind und zwischen denen der Befestigungsflansch (14) unter Zwischenschaltung mindestens eines ringförmigen Dämpfungselements (24) angeordnet ist. (Fig. 19)

14. Gebläsemotor (10) nach Anspruch 13, **dadurch gekennzeichnet, dass** das Dämpfungselement (24) Teil des Befestigungsflansches (14) und/oder der Gehäusetopfteile (60, 62) ist. (Fig. 20)

15. Gebläsemotor (10) nach Anspruch 9, **dadurch gekennzeichnet, dass** der Belüftungskanal (50) Teil des Befestigungsflansches (14) ist. (Fig. 21)

16. Gebläsemotor (10) nach einem der vorhergehenden Ansprüche, **dadurch gekennzeichnet, dass** das Dämpfungselement (24) im Zweikomponentenspritzverfahren hergestellt ist.

17. Gebläsemotor (10) nach einem der vorhergehenden Ansprüche, **dadurch gekennzeichnet, dass** der Befestigungsflansch (14) auf einer oder beiden Stirnseiten mit Dämpfungsmaterial mindestens teilweise beschichtet ist.

## Claims

1. Fan motor (10) which is accommodated in a housing pot (12) having a fastening flange (14), at least one annular damping element (24, 54, 56, 90) being arranged between the housing pot (12) and a fastening region (16) of the fastening flange (14), **characterized in that** the fastening flange (14) consists of an inner part (20) and an outer part (22) which are connected to one another via the damping element (24).

2. Fan motor (10) according to Claim 1, **characterized in that** the damping element (24) consists of materials with different physical properties.

3. Fan motor (10) according to either of the preceding claims, **characterized in that** the housing pot (12) has a travel limiting means in the circumferential direction and/or in the radial and/or in the axial direction with respect to the fastening region (16).

4. Fan motor (10) according to one of Claims 1 to 3, **characterized in that** the inner part (20) and the outer part (22) overlap partially and, in this region, the annular damping element (24) is moulded on, vulcanized on or adhesively bonded on. (Fig. 3)

5. Fan motor (10) according to one of Claims 1 to 3, **characterized in that** the inner part (20) and the outer part (22) lie in one plane, and one part (20, 22) encloses, at the connecting point, the damping element (24) with an annular shoe (82), whereas the other part (20, 22) is embedded via the open side into a damping element (24).

6. Fan motor (10) according to one of Claims 1 to 3, **characterized in that** the outer part (22) overlaps the inner part (20), and at least one annular damping element (24) is arranged between both parts (20, 22), which damping element (24) is braced between both parts (20, 22) via fastening elements (84, 86) which are decoupled by way of further damping elements (88) with respect to the parts (20, 22). (Fig. 5)

7. Fan motor (10) according to one of Claims 1 to 3, **characterized in that**, in the case of a horizontal installation of the fan motor (10), the annular damping element (24) is arranged in such a way that it is subjected to a compressive load (34, 36). (Fig. 9)

8. Fan motor (10) according to one of the preceding claims, **characterized in that** the fastening flange (14) is connected releasably to the housing pot (12, 60, 62).

9. Fan motor (10) according to the precharacterizing clause of Claim 1 or according to Claim 8, **characterized in that** the housing pot (12) has a horizontal or a vertical dividing plane (58), the two housing pot parts (60, 62) being connected by means of clips, adhesive, screws or rivets, and the fastening flange (14) being attached to the housing pot parts (60, 62) with at least one annular damping element (24) being connected in between. (Figs. 14 to 22)

10. Fan motor (10) according to Claim 9, **characterized in that** the fan motor (10) is mounted in the housing pot (12) rigidly or with damping and sealing elements (66) being connected in between in the horizontal and/or in the vertical direction. (Figs. 16 to 22)

11. Fan motor (10) according to Claim 9, **characterized in that** electrical connectors (68) and/or system-specific ventilation ducts (50) are assigned to a housing pot part (62). (Figs. 17 to 22)

12. Fan motor (10) according to Claim 9, **characterized in that**, in the region of the dividing plane (58), the housing pot parts (60, 62) have moulded-on damping elements (70, 72) which are connected in an integrally joined manner to the annular damping element (24) which is moulded onto the fastening flange (14). (Fig. 18)

13. Fan motor (10) according to Claim 9, **characterized in that**, in the region of the dividing plane (58), the housing pot parts (60, 62) have integrally moulded edges (74) which are screwed or riveted to one another and between which the fastening flange (14) is arranged with at least one annular damping element (24) being connected in between. (Fig. 19)

14. Fan motor (10) according to Claim 13, **characterized in that** the damping element (24) is part of the fastening flange (14) and/or of the housing pot parts (60, 62). (Fig. 20)

15. Fan motor (10) according to Claim 9, **characterized in that** the ventilation duct (50) is part of the fastening flange (14). (Fig. 21)

16. Fan motor (10) according to one of the preceding claims, **characterized in that** the damping element (24) is manufactured using the two-component injection moulding process.

17. Fan motor (10) according to one of the preceding claims, **characterized in that** the fastening flange (14) is coated at least partially with damping material on one or both ends sides.

## Revendications

1. Moteur de ventilateur (10) qui est logé dans une cuve de boîtier (12) comportant une bride de fixation (14), dans lequel au moins un élément d'amortissement annulaire (24, 54, 56, 90) est disposé entre la cuve de boîtier (12) et une région de fixation (16) de la bride de fixation (14), **caractérisé en ce que** la bride de fixation (14) est constituée d'une partie interne (20) et d'une partie externe (22) qui sont reliées l'une à l'autre par l'intermédiaire de l'élément d'amortissement (24).

2. Moteur de ventilateur (10) selon la revendication 1, **caractérisé en ce que** l'élément d'amortissement (24) est constitué de matériaux ayant des propriétés physiques différentes.

3. Moteur de ventilateur (10) selon l'une quelconque des revendications précédentes, **caractérisé en ce que** la cuve de boîtier (12) présente une limite de course opposée à la région de fixation (16) dans la direction circonférentielle et/ou dans la direction radiale et/ou dans la direction axiale.

4. Moteur de ventilateur (10) selon l'une quelconque des revendications 1 à 3, **caractérisé en ce que** la partie interne (20) et la partie externe (22) se chevauchent partiellement et **en ce que** l'élément d'amortissement annulaire (24) est injecté, vulcanisé ou collé dans cette région. (Figure 3)

5. Moteur de ventilateur (10) selon l'une quelconque des revendications 1 à 3, **caractérisé en ce que** la partie interne (20) et la partie externe (22) se situent dans un plan et **en ce qu'**une partie (20, 22) enserre l'élément d'amortissement (24) au moyen d'un patin annulaire (82) au point de jonction, tandis que l'autre partie (20, 22) est encastrée par l'intermédiaire de la face ouverte dans un élément d'amortissement (24).

6. Moteur de ventilateur (10) selon l'une quelconque des revendications 1 à 3, **caractérisé en ce que** la partie externe (22) chevauche la partie interne (20) et **en ce qu'**au moins un élément d'amortissement annulaire (24) est disposé entre les deux parties (20, 22), lequel élément d'amortissement est serré entre les deux parties (20, 22) par l'intermédiaire d'éléments de fixation (84, 86), lesquelles parties sont découplées par rapport aux parties (20, 22) au moyen d'autres éléments d'amortissement (88). (Figure 5)

7. Moteur de ventilateur (10) selon l'une quelconque des revendications 1 à 3, **caractérisé en ce que**, lors d'un montage horizontal du moteur de ventilateur (10), l'élément d'amortissement annulaire (24) est agencé de manière à répondre à une pression (34, 36). (Figure 9)

8. Moteur de ventilateur (10) selon l'une quelconque des revendications précédentes, **caractérisé en ce que** la bride de fixation (14) est reliée de manière amovible au boîtier de logement (12, 60, 62).

9. Moteur de ventilateur (10) selon le préambule de la revendication 1 ou selon la revendication 8, **caractérisé en ce que** le boîtier de logement (12) possède un plan de séparation (58) horizontal ou vertical, dans lequel les deux parties de boîtier de logement (60, 62) sont reliées au moyen d'agrafes, de colle, de vis ou de rivets et dans lequel la bride de fixation (14) est montée sur les parties de boîtier de logement (60, 62) avec interposition d'au moins un élément d'amortissement annulaire (24). (Figures 14 à 22)

10. Moteur de ventilateur (10) selon la revendication 9, **caractérisé en ce que** le moteur de ventilateur (10) est positionné dans le boîtier de logement (12) de manière rigide ou avec interposition d'éléments d'amortissement ou d'étanchéité (66) dans une direction horizontale et/ou verticale. (Figures 16 à 22)

11. Moteur de ventilateur (10) selon la revendication 9, **caractérisé en ce que** des connexions électriques (68) ou des canaux d'aération propres à l'installation (50) sont associés à une partie de boîtier de logement (62). (Figures 17 à 22)

12. Moteur de ventilateur (10) selon la revendication 9, **caractérisé en ce que** les parties de boîtier de logement (60, 62) présentent, dans la région du plan de séparation (58), des éléments d'amortissement injectés (70, 72) qui sont reliés par liaison de matériau à l'élément d'amortissement annulaire (24) qui est injecté sur la bride de fixation (14). (Figure 18)

13. Moteur de ventilateur (10) selon la revendication 9, **caractérisé en ce que** les parties de boîtier de logement (60, 62) possèdent, dans la région du plan de séparation (58), des bords façonnés (74) qui sont vissés ou rivetés l'un à l'autre et entre lesquels est disposée la bride de fixation (14) avec interposition d'au moins un élément d'amortissement annulaire (24). (Figure 19)

14. Moteur de ventilateur (10) selon la revendication 13, **caractérisé en ce que** l'élément d'amortissement (24) fait partie de la bride de fixation (14) et/ou de la partie de boîtier de logement (60, 62). (Figure 20)

15. Moteur de ventilateur (10) selon la revendication 9, **caractérisé en ce que** le canal d'aération (50) fait partie de la bride de fixation (14). (Figure 21)

16. Moteur de ventilateur (10) selon l'une quelconque des revendications précédentes, **caractérisé en ce que** l'élément d'amortissement (24) est réalisé par un procédé d'injection à deux constituants.

17. Moteur de ventilateur (10) selon l'une quelconque des revendications précédentes, **caractérisé en ce que** la bride de fixation (14) est revêtue d'un matériau d'amortissement sur l'une des faces avant ou les deux.
